# EUROPEAN PATENT SPECIFICATION

(11) **EP 3 294 927 B1**
(45) Date of publication and mention of the grant of the patent: **04.12.2019**
(21) Application number: 16723336.0
(22) Date of filing: 12.05.2016
(51) Int. Cl.: C23F 11/10, C09K 8/54, C10G 75/02, C23F 11/12, C23F 11/14, E21B 41/02

(54) **CORROSION INHIBITOR FORMULATIONS**
KORROSIONSHEMMERFORMULIERUNGEN
FORMULATIONS D'INHIBITION DE LA CORROSION

(30) Priority: 13.05.2015 US 201562160837 P
(43) Date of publication of application: 21.03.2018
(73) Proprietor: Rhodia Operations, 75009 Paris (FR)
(72) Inventor: HATCHMAN, Kevan, Wolverhampton West Midlands WV4 6GB (GB)
(74) Representative: Cordier, Pascal Christian
(86) International application number: PCT/EP2016/060645
(87) International publication number: WO 2016/180916

(56) References cited:
- CN-A- 103 805 152
- US-A- 4 113 498
- US-A- 4 498 997
- US-A1- 2009 324 820
- US-A1- 2013 274 155

## Description

The instant invention relates to corrosion inhibition mixtures especially suitable for decreasing or preventing corrosion of metal surfaces, such as steel metal surfaces, in presence of water and oxygen, said corrosion inhibition mixtures being typically intended for decreasing or preventing corrosion of metallic pipes and containers in contact with fluids such as oxygenated drilling fluids used in the scope of oil and gas extraction.

The management of corrosion problems is strategically important especially to oil production companies. Failure to implement an effective corrosion inhibition programme can lead to catastrophic results that are costly to rectify. In order to prevent/decrease corrosion, different kinds of inhibitors have been proposed. Most often, corrosion inhibition formulations disclosed so far include ingredients such as surfactants which adsorb on to the metal surface to form a protective barrier film.

A major disadvantage of commercially available oilfield corrosion inhibitor formulations is their environmental profile. As an example, one of the most widely used surfactant corrosion inhibitor chemistries in oilfield are those based on C₈-C₁₈ alkyl amines, C₈-C₁₈ alkyl diamines, C₈-C₁₈ alkyl amidoamines, C₈-C₁₈ alkyl hydroxyethyl or aminoethyl imidazolines, e.g. tall oil fatty acid derivatives, and quaternary C₈-C₁₈ alkyl ammonium salts. Although their performance attributes are well known, these compounds are often incompatible with other components such as anionic corrosion inhibitors, e.g. phosphate esters, or they are insoluble or weakly soluble in the production fluids, thereby leading to a problematic separation phase processus known as "gunking". Moreover, they generally have a poor biodegradability and a potential to bioaccumulate in the ecosystem, and they are harmful or toxic to aquatic species.

Alternatives solutions have been proposed in order to meet the requirements of global environmental legislation, including e.g. the use of alkyl amphoacetates as described in WO2012/063055 or alkyl polyglucoside/polyaspartate of WO2007/063069. These compounds, however, have limitations in their performance attributes such as chemical and/or thermal stability and compatibility with brines, especially with high TDS (total dissolved solids) brines.

More generally, the use of corrosion inhibitors surfactants tends to lead to emulsification of hydrocarbons and the generation of foam in production equipment, that are to be avoided. Additional costs are often incurred by treating these problems, typically with an addition of demulsifiers, water clarifiers and/or foam control agents.

US 2009/324820 A1, US 2013/274155 A1, CN 103 805 152 A and US 4 498 997 A discloses each a corrosion inhibiting composition for metallic surfaces in contact with an oilfield fluid, which compositions comprise at least one polyhydroxyacid and/or a salt thereof.

The instant invention aims at providing corrosion inhibitors that allow to avoid the above drawbacks. More precisely, one aim of the invention is to provide a corrosion inhibitor formulation that meets the requirements of global environmental legislation and that are able to prevent/inhibit corrosion in presence of oxygen, even in brines, especially TDS brines, used in the oilfield.

To this end, the instant invention provides a corrosion inhibitor composition that contains an association of biodegradable components that have now be found as acting together to provide an efficient anticorrosion effect especially in oxygenated high TDS brines used in oilfield.

According to a first aspect, one subject matter of the instant invention is a corrosion inhibitor composition as defined in claim 1. The composition contain:
(a) at least one biodegradable polyhydroxyacid and/or polyhydroxylated derivative thereof, preferably a polyhydroxyacid that may be in all or part in the form a polyhydroxylated salt and/or a polyhydroxyamide ; and
(b) at least a biodegradable cationic compound having a molecular weight of less than 500 Da, preferably between 50 and 400 Da, for example between 100 and 200 Da.

Another subject matter of the instant invention is the use of a composition as defined in claim 1 for providing an anticorrosion effect on a metallic surface, for example on a metallic surface in contact with an oilfield fluid, especially an oxygenated oilfield fluid, e.g. an oxygenated oilfield brine, typically a high TDS brine.

The polyhydroxyacid and/or polyhydroxylated derivative thereof as used in the composition of the invention (hereinafter referred as "compound (a)") may especially be selected among :
- biodegradable polyhydroxy acids, such as gluconic acid, tartaric acid, polyaspartic acid and/or glutamic acid,
   gluconic acid being especially preferred ;
- ammonium or metal salts of such biodegradable polyhydroxy acids (especially alkali metal salts) ;
- alkanolamine salts of such biodegradable polyhydroxy acids
- polyhydroxy amides obtainable by reaction of alkanolamines with such biodegradable polyhydroxy acids;
- mixtures thereof.

Compound (a) may especially be gluconic acid, preferably in all or part in the form of a salt (gluconate) or an amide as defined above.

The biodegradable cationic compound as used in the composition of the invention (hereinafter referred as "compound (b)") is:
- a choline salt (choline being trimethyl (2-hydroxyethyl) ammonium hydroxide), such as choline chloride, for example, that has a molecular weight of about 140 Da, that is well biodegradable ;
- a (C₁-C₃ alkyl)trimethylammonium or di(C₁-C₃ alkyl) dimethylammonium salt (for example a halide, e.g. chloride, methosulfate or morpholine salt);
- a dihydroxy tri(C₁-C₃ alkyl) ammonium halide or dihydroxy tri(C₁-C₃ hydroxyalkyl) ammonium halide, e.g. 2,3 dihydroxypropyl trimethyl ammonium chloride (for example PD Quat supplied by Dow Chemicals which has a molecular weight of 170 Da);
- a cationic compound as obtained by the hydrolysis of chlorohydroxalkyl tri(C₁-C₃ alkyl or hydroxalkyl) ammonium salts; or
- a mixture of two or more of said salts.

The compound (b) is a choline salt, notably a choline halide such as choline chloride. An especially interesting composition according to the instant invention includes gluconic acid, preferably in all or part in the form of gluconate salts as compound (a) and a choline salt, preferably choline chloride as compound (b).

In the scope of the instant invention, it has now been surprisingly found that the addition of a low molecular cationic compound (b) as defined in claim 1 to the polyhydroxyacid and/or polyhydroxylated derivative thereof (a) enhanced the intrinsic anticorrosion qualities of said compound (a), leading to an especially high anticorrosion effect, sufficiently strong for inhibiting corrosion in presence of oxygen even in highly TDS brines used in oilfield.

Polyhydroxy acids, commonly used as biodegradable chelants and builders in cleaning formulations (water softeners), have also been identified in some publications as able to exhibit some corrosion inhibition. However, the corrosion inhibition described so far with such compounds was well lower than the unexpected anticorrosion effect that the inventors have now discovered when they are use in association with compound (b).

The inventors have observed that, in the presence of electrolyte such as brine, the mixture of compounds (a) and (b) of the invention reduce the corrosion rate of the metal, in a better way than the individual components, even in the presence of water hardness ions such as calcium. Which is especially surprising since the compound (b) as such, used so far essentially as shale swelling inhibitor in drilling fluids (see e.g. EP 634 468 A1), does not reduce alone the corrosion rate.

The association of compounds (a) and (b) provides another non negligible advantage, that is that they do not induce the formation of foam, and does not form emulsion when in contact with hydrocarbon such as those present in the extracted crude oil, contrary to the surfactant suggested in the prior art. The invention consequently allows to provide a not foaming and not emulsifying composition if needed, with the only condition not to introduce any additive that would induces a foaming or emulsification. In this connection, the compounds(a) and (b) are for example preferably not used together with an anticorrosion surfactant. Compositions comprising compounds (a) and (b) without any other additives inducing a forming or emulsifying effect constitute another specific aspect of the instant invention.

Preferably, but not necessarily, the composition of the invention further includes :
(c) an antioxidant, preferably biodegradable, for example selected from ascorbic acid and/or a salt thereof such as sodium ascorbate, isoascorbic acid (also called erythorbic acid) and/or a salt thereof such as sodium iso-ascorbate (sodium erythorbate); lactobionic acid and/or a salt thereof ; and mixtures thereof.

Such an antioxidant (also referred in the instant description as "compound (c)") may be used alone or in admixture with an oxygen scavenger, for example ammonium or alkali metal bisulfites and alkylhydroxylamines, e.g. diethylhydroxylamine (DEHA).

According to a specifically interesting embodiment, a composition according to the invention includes gluconic acid, preferably in all or part in the form of gluconate salts as compound (a) ; a choline salt, preferably choline chloride as compound (b); and (c) an antioxidant, preferably isoascorbic acid and/or a salt thereof, with or without additional oxygen scavenger. The above antioxidant does not jeopardize the non-foaming and non-emulsifying properties.

Whatever an antioxidant is used or not, the inventors have discovered that it is advantageous to introduce a pH buffer in the composition. In this scope, the use of a buffer comprising or consisting in calcium oxide CaO is especially interesting, especially when compound (a) is a gluconate used with a choline salt as compound (b). The buffer, especially when it contains CaO, allows to obtain even better anticorrosion properties. Especially, it maintains the anticorrosion properties of the composition over long period, typically at least during 24 hours.

Thus, according to a interesting embodiment, the composition of the invention futhermore contains :
(d) a pH buffer, preferably containing CaO.

The association of compound (a) and antioxidant (c), for example gluconate and isoascorbate, induce a more effective anticorrosion effect than with each of the compound alone, even without making use of compound (b), and that the obtained anticorrosion effect is especially high in the presence of a buffer, and notably when the buffer is based on calcium oxide.

Different features and specific embodiments of the invention are described in more details hereinafter.

### ▪ the compound (a)

Polyhydroxy acids especially usefull as compound (a) according to the instant invention include gluconic acid, tartaric acid, glucoheptonic acid and polyaspartic acid, preferably in the form of biodegradable salts thereof, that can be e.g. carboxylates, alkanolamine, alkali metal (Na, K), Ca Fe, Zn or Mb salts of gluconates, tartrates, glucoheptonates (α or β form), glutamic acid N,N-diacetic acid (GLDA) or polyaspartates. The carboxylates may be present as mixtures or formulated with other biodegradable chelants such as iminosuccinates and phosphonates.

Compounds (a) of specific interest according to the instant invention include gluconate salts as obtained by the reaction of glucono deltalactone with an alkanolamine (e.g. diethanolamine).

Gluconate salt of diethanolamine, sodium glucoheptonate and sodium polyaspartate are i.a. compounds (a) of interest.

Without being linked by a specific theory, it seems that the compound (a) of the invention, especially when it is a gluconate salt, forms a protective barrier by depositing as a thin layer on the surface of the metal substrate to be protected, with a deposition mechanism influenced by the concentration of the polyhydroxy acid salt, electrolyte concentration (ionic strength) and the brine chemistry (presence of hard water cations). At a fixed concentration of the gluconate, the corrosion inhibition performance was observed by the inventors to improve as the electrolyte concentration increased.

Furthermore, the corrosion inhibition properties seems to be better when the composition comprises or is used with calcium cations. For example, the inventors observed that corrosion inhibition properties of the gluconate are enhanced in CaCl2 brines compared to NaCl brines. The reason for the enhanced corrosion inhibition is likely to be the result of the deposition of a film of calcium gluconate on the surface of the metal substrate.

Whatever their exact composition, compound (a) is preferably present in the composition of the invention at a content of about 0.1 to 50% by weight, typically between 1 to 40%, for exemple between 10 and 30 %, based on the total weight of the composition.

### ▪ the compound (b)

Whatever their exact composition, compound (b) is preferably present in the composition of the invention at a content of about 0.1 to 50% by weight, typically between 1 to 40%, for example between 10 and 30 %, based on the total weight of the composition based on the total weight of the composition.

Besides, the mass ratio (a)/(b) of the polyhydroxyl compound (a) to the cationic compound (b) is typically from 90/10 to 10/90, preferably from 75/25 to 25/75.

### ▪ possible additives

In addition to compounds (c) (antioxidant), typically present at a content of at most 5% by weight based on the total weight of the composition, and (d) (buffer) described herein above, a composition according to the instant invention may further comprise additional additives, depending on the specific application where it has to be used.

According to a possible embodiment, a composition according to the invention may independently contain (or alternatively be free from) one or more of the following component:
- sulphur compounds synergists such as sodium thiosulfate : their presence is advantageous since it has now be found they tend to boost the performance of the corrosion inhibition (typically, when such a sulphur compound is used, its content is of 0,1-5% by weight, for example from 0,5 to 3%, based on the total weight of the composition);
- passivating agents such as sodium molybdate and carboxylate-molybdate complexes (the presence of which is not necessary);
- component inducing a foaming and or emulsifying effect : their presence is absolutely not required and they can be avoided in the scope of the invention, which is an advantage in comparison with the anticorrosion surfactant described in the prior art. However, according to a specific embodiment, if the foaming or emulsification is not an issue, the composition may contain foaming agents or emulsifiers. For example, it may contain surfactants, wetting agents, scale inhibitors and/or solvents (generally for a total of less than 50% by weight, based on the totalk weight of the composition);
- winterizing agent, typically glycols and/or glycol ethers (typically at a content of 0,1-10% by weight basd on the taotal weight of the composition, if any).

### ▪ Applications

The composition of the invention is suitable for use as a corrosion inhibitor in produced fluids or concentrated electrolyte systems, such as weighted oilfield brines for drilling applications, e.g. NaCl, KCl, CaCl2, ZnCl2, NaBr, KBr, Na Formate, K formate and Cs Formate, typically with an SG of 1.1 - 2.8.

The compostion of the invention is compatible with both low and high TDS (total dissolved solids) brines, contrary to the film forming surfactant corrosion inhibitors described so far.

The composition of the invention may be used in topside oilfield applications as well as a corrosion inhibitor system in weighted or heavy brines for drilling, completion and workover operations. The biodegradable chelant/quat compositions can be used as an additive in corrosion inhibitor formulations, detergents, e.g. oil rig or bilge tank cleaners, and foamers for gas well deliquification or underbalanced drilling (foams) applications.

The composition of the invention may be used alone or as a secondary or tertiary component in a corrosion inhibitor or oilfield formulation. The use level of compounds (a) and (b) is typically 0.1 - 10.0% a.i., though more concentrated formulations, i.e. 50 - 80% a.i. may be used where space is a premium for the storage of chemicals, i.e. offshore facilities.

The composition of the invention may more generally be used as an additive in corrosion inhibitor formulations, detergents, e.g. oil rig or bilge tank cleaners, and foamers for gas well deliquification or underbalanced drilling (foams) applications.

The composition of the invention is especially relevant for general oilfield applications, in particular for the management of corrosion in oilfield production facilities, both topside and subsurface installations, e.g. refineries, transport infrastructure (pipelines, storage tanks), oil and gas wells. The composition of the invention may be used as a corrosion inhibitor for well casings and as an additive in drilling, hydraulic fracturing and well completion applications such as spacer fluids.

A typical composition according to the invention, suitable e.g. for high TDS brine may for example comprise the following ingredients:

| **Component** | **% w/w** |
|---|---|
| Compound (a), for example gluconate salt of diethanolamine, sodium glucoheptonate or sodium polyaspartate | 0.1 - 50.0 |
| Compound (b), e.g. choline chloride | 0.1 - 50.0 |
| Winterising agents, e.g. glycols and glycol ethers | 0.1 - 10.0 |
| Wetting or dispersing agents, e.g. surfactants | 0.1 - 5.0 |
| Sulfur synergist, e.g. sodium thiosulfate or preferable compound (c) | 0.1 - 5.0 |
| Scale Inhibitors, e.g. halite, phosphonates etc. | 0.1 - 5.0 |
| Scavengers, e.g. oxygen, hydrogen sulfide | 0.1 - 5.0 |
| Water | Balance |

A typical composition according to the invention, suitable e.g. for low TDS brine or freshwater applications may contain surfactants for detergency, dispersants or use as film forming corrosion inhibitors, and for example be as follows :

| **Component** | **% w/w** |
|---|---|
| Surfactant corrosion inhibitor, e.g. C8 - 18 alkyl amidoamine, C8 - C18 alkyl diamine, C8 - 18 alkyl trimethyl ammonium or dialkyl dimethylammonium halide, C8 - 18 ester quats, C18 - 18 amidopropyl betaine, C8 - C18 alkyl ampho(di)acetate or C8 - 18 alkyl amphodipropionate, C8 - 18 alkyl iminodipropionate, C8 - 18 alkyl or alkyl ethoxy phosphate ester, C8 - 18 alkyl ether carboxylate, C8 -18 alkyl or dialkyl sulfosuccinate and C8-18 alkyl ethoxy sulfosuccinate, C8 - 18 acyl sarcosinate, C8 - 18 acyl glutamate, C8 - 18 acyl glycinate, C8 - 18 acyl taurate, C8 - 18 alkyl polyglucoside, C8 - 18 alcohol alkoxylates (EO or EO/PO) | 0.1 - 50.0 |
| Compound (a), e.g. gluconate salt of diethanolamine, sodium glucoheptonate or sodium polyaspartate | 0.1 - 10.0 |
| Compound (b) e.g. choline chloride | 0.1 - 10.0 |
| Winterising agents, e.g. glycols and glycol ethers | 0.1 - 10.0 |
| Wetting or dispersing agents, e.g. surfactants | 0.1 - 50.0 |
| Sulfur synergist, e.g. sodium thiosulfate or preferably compound (c) | 0.1 - 5.0 |
| Scale Inhibitors, e.g. halite, phosphonates etc. | 0.1 - 5.0 |
| Water | Balance |

The composition of the invention have been developed for oilfield applications, but may be used in any field where a corrosion inhibition is sought.

For example, the composition of the invention may be used for limiting/avoiding corrosion in agrochemical applications, for example for protecting metallic surfaces from fertilizer formulations that can be highly corrosive. The use of choline chloride as compound (b) is of specific interest in this scope, since this compound acts as a bio-activator.

The following examples illustrate the invention.

### Examples

The performance of compositions according to the invention were assessed using ASTM methodologies, i.e. ASTM G170-06 (2012) for the assessment of corrosion inhibitors for oilfield and refinery applications. The corrosion rates were determined for a range of different metals by immersing test coupons in the aqueous electrolyte solutions. The compounds (a) and (b) were added to the solutions and the weight loss was determined over a period of seven days at 50°C or 80°C respectively. The active concentration of the corrosion inhibitors was fixed.

An illustartion of the synergistic behaviour of the compounds present in the compositions of the inventionis given for the gluconate diethanolamine salt (GDES) as compound (a) and choline chloride as compound (b) at 80°C using N80 steel (well casing) coupons immersed in the aqueous brine solutions for seven days. The solutions were stored at atmospheric pressure for the period of the test.

The total active inhibitor concentration was 4.0 %.

The gluconate diethanolamine salt (50% aqueous solution) was benchmarked against choline chloride and didecyl dimethyl ammonium chloride (FENTACARE D1021-80) respectively (see table) in the NaCl and CaCl2 brines.

The corrosion rate mm/year (mils/year) was calculated from the weight loss measurements.

The surfactant, FENTACARE D1021-80 is not soluble in the brine and formed an insoluble organic layer on the surface of the brine.

The corrosion rate of the coupon immersed in the surfactant solution was found to be comparable to the blank (no corrosion inhibitor). The gluconate however was found to be an effective corrosion inhibitor and there was a further reduction in the corrosion rate when 50% of the gluconate was replaced by the surfactant.

Choline chloride is soluble in the high TDS brines and was observed to produce a similar response to the cationic surfactant in the immersion tests. Although choline chloride produces a slight reduction in the corrosion rate compared to the blank, replacing 50% of the choline chloride with the gluconate diethanolamine salt results in an effective corrosion inhibitor system. The corrosion rate is reduced by 50% compared to the gluconate in 20% w/w NaCl and CaCl2 respectively.

Immersion corrosion inhibition data for GDES/quat systems in high TDS brines at 80oC with N80 steel (well casing) test coupons

| **Brine** | **Brine Concen tration (%)** | **Component** | **Weight Loss (mg)** | **Weight Loss (%)** | **Corrosion Rate mm/year (mils/year)** |
|---|---|---|---|---|---|
| NaCl | 20 | Blank | 11.4 | 0.039 | 0.026 (1.015) |
| | | 4% a.i. GDES | 3.4 | 0.012 | 0.008 (0.303) |
| | | 4% a.i. 50/50 GDES & Choline Chloride | 2.3 | 0.008 | 0.005 (0.205) |
| | | 4% a.i. Choline Chloride | 7.9 | 0.027 | 0.018 (0.703) |
| | | | | | |
| | | Blank | 16.2 | 0.056 | 0.036 (1.438) |
| | | 4% a.i. GDES | 4.1 | 0.014 | 0.009(0.364) |
| | | 4% a.i. 50/50 GDES & FENTACARE D1021-80 | 3.4 | 0.012 | 0.008 (0.302) |
| | | 4% a.i. FENTACARE D1021-80 | 12.3 | 0.043 | 0.028 (1.092) |
| CaCl2 | 20 | Blank | 10.4 | 0.036 | 0.024 (0.926) |
| | | 4% a.i. GDES | 2.9 | 0.010 | 0.007 (0.258) |
| | | 4% a.i. 50/50 GDES & Choline Chloride | 1.8 | 0.006 | 0.004 (0.16) |
| | | 4% a.i. Choline Chloride | 9.8 | 0.034 | 0.022 (0.872) |
| | | | | | |
| | | Blank | 10.5 | 0.036 | 0.024 (0.932) |
| | | 4% a.i. GDES | 1.5 | 0.005 | 0.003 (0.133) |
| | | 4% a.i. 50/50 GDES & FENTACARE D1021-80 | 1.0 | 0.003 | 0.002 (0.089) |
| | | 4% a.i. FENTACARE D1021-80 | 19.3 | 0.066 | 0.044 (1.713) |

The effect of the combination of the gluconate and chloline chloride is even enhanced when combined with an antioxidant, such as erythorbic acid or neutralized salts of erythorbic acid, in aerated systems compared to the gluconate with or without the antioxidant.

The advantage of using an antioxidant instead of traditional oxygen scavengers such as bisulfites is that it does not form an oxidised residue that precipitates from the brine. Bisulfites form sulfates that are liable to precipitate from the brine and may cause additional corrosion problems.

RCE measurements with an oxygen saturated brine (1000 rpm, 30% CaCl2 at 50°C) clearly demonstrated that the individual components of the formulation (gluconate, chloline chloride and erythorbic acid (potassium salt) do not exhibit any appreciable improvement, with the exception of choline chloride, in the protection against corrosion. The oxygen levels were monitored and a summary of the results are given in the following table.

### C1018 corrosion rates obtained with the ingredients

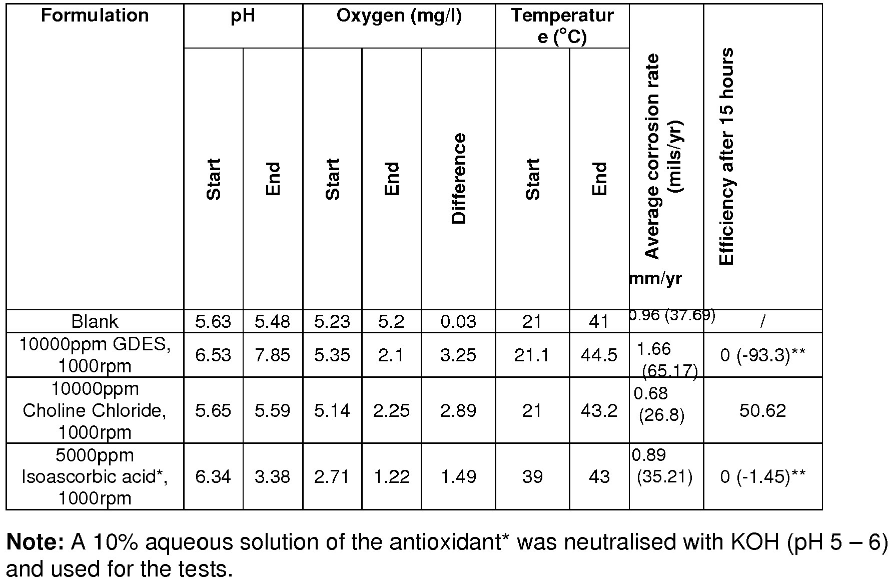

Negative inhibitor efficiencies indicate corrosion.

Similar results were observed for the mixtures of the ingredients without the antioxidant.

### C1018 corrosion rates obtained with choline chloride and Gluconate Diethanolamine (GDES)

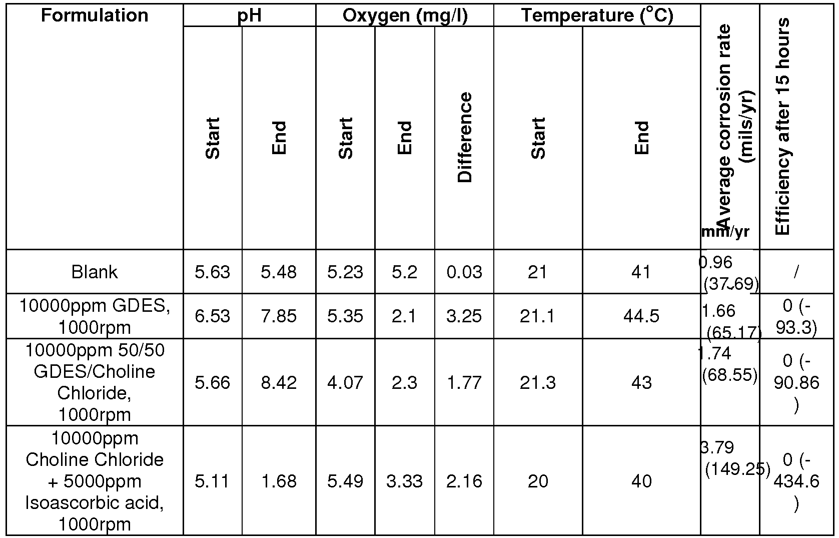

When the antioxidant is added to the formulation (2:1 inhibitor/antioxidant ratio), there was a significant improvement in the overall corrosion inhibitor efficiency. An additional synergy of mixing the ingredients is that the oxygen content of the brine was reduced to < 0.1 mg/l, thus mitigating the effects of corrosion due to the presence of oxygen.

The above formulation comprising choline chloride and isoascorbic acid is not according to the invention.

### C1018 corrosion rates obtained for the corrosion inhibitor formulations with the antioxidant*

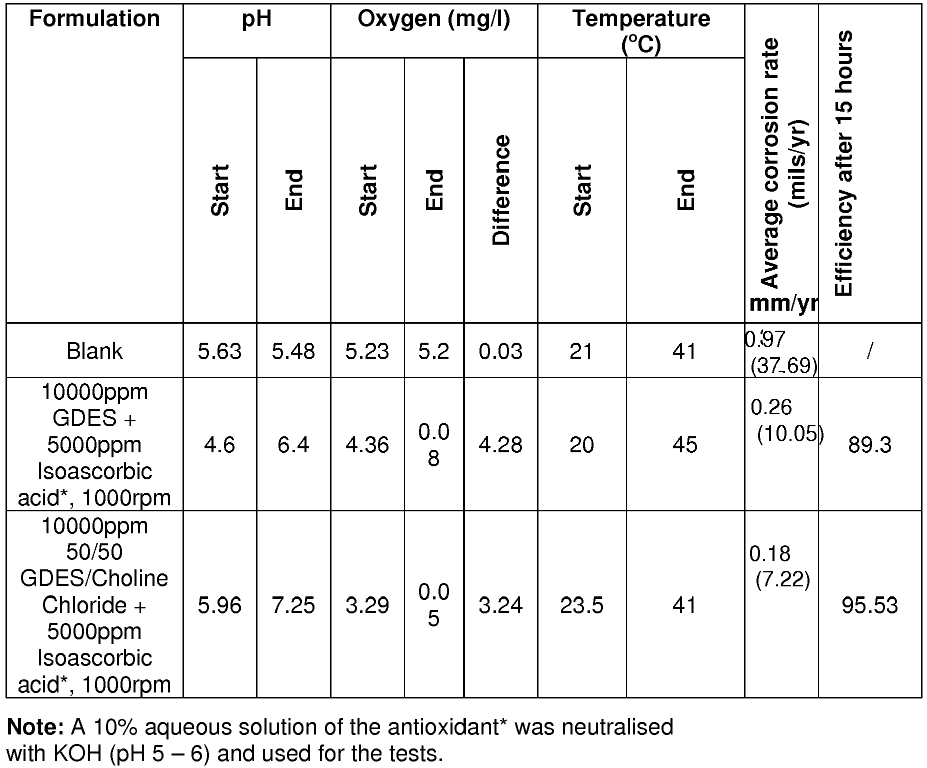

It is clearly seen the combination of the gluconate with choline chloride has superior inhibition performance compared to the gluconate with the antioxidant.

The above formulation comprising GDES and isoascorbic acid is not according to the invention.

## Claims

1. A corrosion inhibitor composition that contains :
(a) at least one biodegradable polyhydroxyacid and/or polyhydroxylated derivative thereof, preferably a polyhydroxyacid that may be in all or part in the form a polyhydroxylated salt and/or a polyhydroxyamide ; and
(b) a biodegradable cationic compound having a molecular weignt of less than 500 Da, preferably between 50 and 400 Da,
wherein the biodegradable cationic compound (b) is :
- a choline salt, choline being trimethyl (2-hydroxyethyl) ammonium hydroxide, preferably choline chloride;
- a (C₁-C₃ alkyl)trimethylammonium or di(C₁-C₃ alkyl) dimethylammonium salt;
- a dihydroxy tri(C₁-C₃ alkyl) ammonium halide or dihydroxy tri(C₁-C₃ hydroxyalkyl) ammonium halide ;
- a cationic compound as obtained by the hydrolysis of chlorohydroxalkyl tri(C₁-C₃ alkyl or hydroxalkyl) ammonium salts; or
- a mixture of two or more of said salts.

2. The composition of claim 1, wherein the biodegradable polyhydroxyacid and/or polyhydroxylated derivative thereof (a) is selected fom :
- biodegradable polyhydroxy acids, for example gluconic acid, tartaric acid, polyaspartic acid and/or glutamic acid ;
- metal salts of such biodegradable polyhydroxy acids ;
- alkanolamine salts of such biodegradable polyhydroxy acids ;
- polyhydroxy amides obtainable by reaction of alkanolamines with such biodegradable polyhydroxy acids; or
- mixtures thereof.

3. The composition of claim 2, wherein the biodegradable polyhydroxyacid and/or polyhydroxylated derivative thereof (a) is gluconic acid, preferably in all or part in the form of a salt or an amide as defined in claim 2.

4. The composition of any of the preceding claims, which futher includes : (c) an antioxidant.

5. The composition of any of the preceding claims, which futher includes : (d) a pH buffer, preferably containing CaO.

6. The composition of any of the preceding claims, which contains (a) gluconic acid, preferably in all or part in the form of gluconate salts as compound (a) ; (b) a choline salt, preferably choline chloride; and (c) an antioxydant, preferably isoascorbic acid and/or a salt thereof.

7. The use of a corrosion inhibitor according to one of the preceeeding claims for providing an anticorrosion effect on a metallic surface, for example on a metallic surface in contact with an oilfield fluid.

8. The use of claim 8 for providing an anticorrosion effect on a metallic surface in contact with an oxygenated oilfield fluid, preferably a high TDS brine.

## Patentansprüche

1. Korrosionshemmerzusammensetzung, enthaltend:
(a) wenigstens eine bioabbaubare Polyhydroxysäure und/oder ein polyhydroxyliertes Derivat davon, vorzugsweise eine Polyhydroxysäure, die vollständig oder zum Teil in der Form eines polyhydroxylierten Salzes und/oder eines Polyhydroxyamids vorliegen kann; und
(b) eine bioabbaubare kationische Verbindung mit einem Molekulargewicht von weniger als 500 Da, vorzugsweise zwischen 50 und 400 Da,
wobei die bioabbaubare kationische Verbindung (b) ist:
- ein Cholinsalz, wobei Cholin Trimethyl(2-hydroxyethyl)ammoniumhydroxid ist, vorzugsweise Cholinchlorid;
- ein (C₁-C₃Alkyl)trimethylammonium- oder Di(C₁-C₃alkyl)dimethylammoniumsalz;
- ein Dihydroxytri(C₁-C₃alkyl)ammoniumhalogenid oder Dihydroxytri(C₁-C₃hydroxyalkyl)ammoniumhalogenid;
- eine kationische Verbindung, wie erhalten durch Hydrolyse von Chlorhydroxyalkyltri(C₁-C₃alkyl- oder hydroxyalkyl)ammoniumsalzen; oder
- ein Gemisch von zwei oder mehr der Salze.

2. Zusammensetzung gemäß Anspruch 1, wobei die bioabbaubare Polyhydroxysäure und/oder das polyhydroxylierte Derivat davon (a) ausgewählt ist aus:
- bioabbaubaren Polyhydroxysäuren, beispielsweise Gluconsäure, Weinsäure, Polyasparaginsäure und/oder Glutaminsäure;
- Metallsalzen derartiger bioabbaubarer Polyhydroxysäuren;
- Alkanolaminsalzen derartiger bioabbaubarer Polyhydroxysäuren;
- Polyhydroxyamiden, erhältlich durch Umsetzung von Alkanolaminen mit derartigen bioabbaubaren Polyhydroxysäuren; oder
- Gemischen davon.

3. Zusammensetzung gemäß Anspruch 2, wobei die bioabbaubare Polyhydroxysäure und/oder das polyhydroxylierte Derivat davon (a) Gluconsäure ist, vorzugsweise vollständig oder zum Teil in der Form eines Salzes oder eines Amids gemäß Anspruch 2.

4. Zusammensetzung gemäß einem der vorstehenden Ansprüche, die ferner enthält:
(c) ein Antioxidationsmittel.

5. Zusammensetzung gemäß einem der vorstehenden Ansprüche, die ferner enthält:
(d) einen pH-Puffer, der vorzugsweise CaO enthält.

6. Zusammensetzung gemäß einem der vorstehenden Ansprüche, der enthält: (a) Gluconsäure, vorzugsweise vollständig oder zum Teil in der Form von Gluconatsalzen, als Verbindung (a); (b) ein Cholinsalz, vorzugsweise Cholinchlorid; und (c) ein Antioxidationsmittel, vorzugsweise Isoascorbinsäure und/oder ein Salz davon.

7. Verwendung eines Korrosionshemmers gemäß einem der vorstehenden Ansprüche zum Verleihen von Antikorrosionswirkung an eine metallische Oberfläche, beispielsweise eine metallische Oberfläche in Kontakt mit einem Ölfeldfluid.

8. Verwendung gemäß Anspruch 8 zum Verleihen von Antikorrosionswirkung an eine metallische Oberfläche in Kontakt mit einem sauerstoffhaltigen Ölfeldfluid, vorzugsweise einer TDS-reichen Kochsalzlösung.

## Revendications

1. Composition d'inhibiteur de corrosion qui contient :
(a) au moins un acide polyhydroxylé biodégradable et/ou un dérivé polyhydroxylé correspondant, préférablement un acide polyhydroxylé qui peut se trouver entièrement ou en partie sous forme d'un sel polyhydroxylé et/ou d'un amide polyhydroxylé ; et
(b) un composé cationique biodégradable possédant un poids moléculaire inférieur à 500 Da, préférablement compris entre 50 et 400 Da,
le composé cationique biodégradable (b) étant :
- un sel de choline, la choline étant l'hydroxyde de triméthyl(2-hydroxyéthyl)ammonium, préférablement le chlorure de choline ;
- un sel de (C₁₋₃-alkyl)triméthylammonium ou de di(C₁₋₃-alkyl)diiméthylammonium ;
- un halogénure de dihydroxy-tri(C₁₋₃-alkyl)ammonium ou un halogénure de dihydroxy-tri(C₁₋₃-hydroxyalkyl)ammonium ;
- un composé cationique tel qu'obtenu par l'hydrolyse de sels de chlorohydroxyalkyl-tri(C₁₋₃-alkyl ou hydroxyalkyl)ammonium ; ou
- un mélange de deux ou plus de ces sels.

2. Composition selon la revendication 1, l'acide polyhydroxylé biodégradable et/ou le dérivé polyhydroxylé correspondant (a) étant choisi(s) parmi :
- des acides polyhydroxylés biodégradables, par exemple l'acide gluconique, l'acide tartrique, le poly(acide aspartique) et/ou l'acide glutamique ;
- des sels métalliques de tels acides polyhydroxylés biodégradables ;
- des sels d'alcanolamine de tels acides polyhydroxylés biodégradables ;
- des amides polyhydroxylés pouvant être obtenus par réaction d'alcanolamines avec de tels acides polyhydroxylés biodégradables ; ou
- des mélanges correspondants.

3. Composition selon la revendication 2, l'acide polyhydroxylé biodégradable et/ou le dérivé polyhydroxylé correspondant (a) étant l'acide gluconique, préférablement entièrement ou en partie sous forme d'un sel ou d'un amide tel que défini selon la revendication 2.

4. Composition selon l'une quelconque des revendications précédentes, qui comprend en outre :
(c) un antioxydant.

5. Composition selon l'une quelconque des revendications précédentes, qui comprend en outre :
(d) un tampon de pH, contenant préférablement CaO.

6. Composition selon l'une quelconque des revendications précédentes, qui contient (a) de l'acide gluconique, préférablement entièrement ou en partie sous forme de sels de gluconate en tant que composé (a) ; (b) un sel de choline, préférablement du chlorure de choline ; et (c) un antioxydant, préférablement l'acide isoascorbique et/ou un sel correspondant.

7. Utilisation d'un inhibiteur de corrosion selon l'une des revendications précédentes destinée à apporter un effet anticorrosion sur une surface métallique, par exemple sur une surface métallique en contact avec un fluide de champ pétrolifère.

8. Utilisation selon la revendication 8, destinée à apporter un effet anticorrosion sur une surface métallique en contact avec un fluide de champ pétrolifère oxygéné, préférablement une saumure présentant une valeur de TDS (total dissolved solids - solides dissous totaux) élevée.
